Europäisches Patentamt

(19) European Patent Office

Office européen des brevets

(11) Publication number: **0 220 062**
**A1**

(12) **EUROPEAN PATENT APPLICATION**

(21) Application number: **86308023.0**

(22) Date of filing: **16.10.86**

(51) Int. Cl.⁴: **H 01 M 2/02**
**H 01 M 2/24, H 01 M 10/34**

(30) Priority: **18.10.85 GB 8525728**

(43) Date of publication of application:
**29.04.87 Bulletin 87/18**

(84) Designated Contracting States:
**DE ES FR GB IT SE**

(71) Applicant: **CHLORIDE GROUP PUBLIC LIMITED COMPANY**
**130 Wilton Road**
**London SW1V 1LQ (GB)**

(72) Inventor: **Morrall, David**
**Burnside Chelford Road**
**Prestbury Cheshire, SK10 4AW (GB)**

(74) Representative: **Jennings, Nigel Robin et al**
**KILBURN & STRODE 30 John Street**
**London WC1N 2DD (GB)**

(54) **Multicell recombination electric storage batteries.**

(57) A lead acid battery includes a container 2 defining a plurality of cells separated by integral intercell partitions 4,8 extending up to the lid and contain substantially no free unabsorbed electrolyte. Each adjacent pair of cells is connected by a respective intercell connector 18 which passes through an aperture 20 in the associated intercell partition. The portion 34 defining the base of the aperture 20 is of reduced thickness and is deformed against the underside of the intercell connector 18 and forms a substantial seal with it. The sides of the aperture 20 form a substantial seal with the sides of the intercell connector by virtue of similar reduced thickness portions or by virtue of an inverted U-shaped sealing member 22 which engages the intercell partition and the side and tops of the intercell connector. There is thus substantially no gas leakage path around the intercell connectors but apertures 26,28 are provided in the intercell partitions for the purpose of the initial filling of the battery with electrolyte.

Fig. 1.

EP 0 220 062 A1

**Description**

## MULTICELL RECOMBINATION ELECTRIC STORAGE BATTERIES

The present invention relates to multicell recombination electric storage batteries, in particular of lead acid type, and is concerned with both the structure of such batteries and a method of filling such batteries with electrolyte.

Recombination batteries are those in which gas evolved on overcharge is not vented to atmosphere but is induced to recombine within the battery. Such batteries are constructed so that substantially only oxygen is evolved on overcharge which diffuses through the separators separating adjacent plates of opposite polarity and is recombined at the negative plates. Such batteries generally have substantially no free unabsorbed electrolyte whereby substantially all the electrolyte is absorbed within the separators and plates.

Conventional lead acid batteries are flooded with electrolyte and adjacent cells are reliably sealed from one another to ensure that intercell ionic leakage currents can not flow which would degrade the performance of the battery and shorten its service life. The cells of such batteries are thus inherently not in gas-communication with each other and are therefore each provided with a respective vent to discharge evolved gases to the atmosphere.

It has been found that in recombination batteries with no free unabsorbed electrolyte it is not necessary for adjacent cells to be reliably sealed from one another since intercell ionic leakage currents tend not to occur by reason of the fact that there is no free electrolyte available for the conduction of such currents. It is possible for the rate of gas evolution in a recombination battery temporarily to exceed the rate of gas recombination and to avoid the battery container bursting it is therefore necessary to provide a safety vent. The absence of a seal between adjacent cells permits the provision of only one safety vent for the whole battery rather than one vent per cell which results in a substantial saving in the manufacturing cost of the battery.

U.S. Patent No.4383011 discloses a multicell recombination lead acid battery in which the cells are separated by intercell partitions integral with the container. The plates are separated by microfine glass fibre separator material and all the electrolyte is absorbed within the plates and separators. The intercell partitions terminate short of the lid whereby there is a gas space beneath the lid which is common to all the cells and with which all the cells communicate. The lid is provided with a single vent which is arranged to open at a small superatmospheric pressure to vent the common gas space to atmosphere.

Electric storage batteries are generally filled by adding electrolyte to each cell individually and this is a time-consuming and/or labour intensive task. An advantage of the construction disclosed in the prior U.S. Patent is that it enables the use of a simplified filling method in which a predetermined volume of electrolyte is added to one cell only and permitted to run over the tops of the intercell partitions to fill all the cells.

A further advantage of the construction disclosed in the prior U.S. Patent is said to be that if one of the cells has more electrolyte than the other cells it will start to evolve gas before the other cells and that some of the gas evolved in the one cell will be recombined in other cells. It is said that the amount of electrolyte in the cells will thus tend to become equalised. Whilst this phenomenon is indeed found to occur what is transferred is only water and the amount of sulphuric acid in each cell inherently remains constant. Accordingly, if there are two cells containing differing volumes of electrolyte of the same specific gravity the cell with the greater amount of electrolyte will start to gas first when the battery is charged and some of this gas will be recombined in the other cell thereby transferring water to it. However, this results in a fall in the specific gravity of the electrolyte in the other cell and an increase in the first cell whereby the partial pressure of the water in the first cell sinks below that in the second cell. Any such difference in partial pressures tends to become equalised over a period of time by virtue of a gradual diffusion of water vapour and thus the equalisation process described in the prior U.S. patent is gradually reversed.

In practice, not only may the cells have differing volumes of electrolyte but the initial specific gravities may differ also for a variety of reasons such as the fact that the different cells experience a different degree of initial electrolytic formation. Such differences in gravity result in a transfer of water between the cells in a manner which tends to equalise the gravities rather than equalise the volumes.

The rate of transfer of water between cells by the mechanism described in the prior U.S. patent is substantially independent of temperature but that by the differential partial pressure mechanism increases sharply with temperature. The rate of water transfer by the latter mechanism is also a non-linear function of the area of communication of the cells. An automotive battery is commonly accommodated in the engine compartment of a car and may operate at a temperature of typically about 60°C or even more and it has been found that at this temperature the rate of water transfer by the partial differential pressure mechanism decreases steadily down to an area of communication of 80 mm$^2$ and thereafter decreases substantially more rapidly.

U.S. Patent No.3846175 discloses a recombination lead acid battery in which adjacent cells are separated from one another by intercell partitions which are integral with a monobloc container. The cells are closed by an inner lid which has a respective depending vent communicating with each cell. The vents communicate with a common gas storage area defined by the inner lid and an outer lid. The cells thus communicate with one another over a relatively small area and the rate of water transfer by the differential partial pressure mechanism is thus very small. However, the electrolyte must be added to each cell individually and this is not only time-consuming and labour intensive but it is also found to be very difficult to match the electrolyte volumes in all the cells.

European Patent Application No. 86304980.5 of the present applicants discloses a battery which combines the advantages of both the prior U.S. specifications disclosed above. In this battery the cells are in gas communication with one another, which permits the use of only a single vent, but only over a relatively small area comprising a relatively large hole at one side of each intercell partition and a relatively small hole at the other side. If the battery is tilted so that the larger holes are lowermost the electrolyte may all be added to one cell and will run from cell to cell through the larger holes whilst the displaced gas redistributes itself through the smaller holes. By virtue of the fact that the area of intercell gas communication is strictly limited the water transfer problem referred to above is substantially eliminated. In the prior application the intercell connectors pass through the intercell partitions but are not reliably sealed thereto. There is thus an area of indeterminate size of intercell gas communication around each intercell connector and this may be of such a size as to disturb or destroy the delicate balance between minimising the area of intercell communication so as to minimise the water transfer problem and ensuring that this area is large enough that the time taken to fill the battery with electrolyte is acceptably short. This problem could of course be solved by completely sealing each intercell connector to the associated partition in a manner which is conventional in flooded electrolyte batteries but this is a time consuming and expensive process and would deprive the battery of one of the major advantages of recombination batteries, namely the ability to omit the complex intercell sealing step.

It is an object of the invention to provide a multicell recombination electric storage battery, in particular of lead acid automotive type, whose cells communicate thereby permitting only a single relief valve to be used and in which the intercell connectors pass through the intercell connectors and are not reliably sealed thereto in any of the known conventional manners but in which there is nevertheless at most a minimal area of intercell gas communication around each intercell connector.

According to the present invention a multicell recombination electric storage battery comprises a container which is closed by a lid and which defines a plurality of cells separated by intercell partitions extending up to the lid and which contains substantially no free unabsorbed electrolyte, each adjacent pair of cells being connected by a respective intercell connector which passes through an aperture in the associated intercell partition and is characterised in that the portion of the intercell partition which defines the base of the aperture is of reduced thickness and contacts the under side of the intercell connector.

It is convenient for manufacturing reasons to form the intercell connectors by inverting the lugs of the plates into a mould and casting the intercell connectors in the inverted position. This means that their under side is rough and thus tends to form a poor seal with the base of the apertures in the intercell partitions thereby leading to a substantial but indeterminant area of gas communication between adjacent cells around the intercell connectors. The provision of a portion of reduced thickness produces an area of increased flexibility which may be readily deformed against the under side of the intercell connector and forms a substantial seal with it. The thickness of the intercell partition may decrease progressively from the nominal thickness of the partition, e.g. 1.5mm at a distance of 2 to 5mm from the bottom edge of the aperture to substantially zero at the bottom edge of the aperture. Alternatively, the thickness of the partition may decrease abruptly to a thickness of e.g. 0.5mm at a distance of 2 to 5mm from the bottom edge of the aperture. As mentioned above, the bottom edge of the aperture contacts the intercell connector and will in general be deformed by it out of the plane of the associated partition to form a seal with it.

It is preferred that the bottom edge of the aperture has one or more slits or notches formed in at least its upper surface and extending away from the aperture which enhances flexibility and thus its ability to conform to the shape of the under side of the intercell connector.

In one embodiment of the invention only the base of the aperture is of reduced thickness and the battery includes an inverted substantially U-shaped sealing member engaging the top and side edges of the intercell connector and engaging the intercell partition. In the preferred embodiment the sealing member has grooves in each of its limbs which accommodate a respective edge of the aperture and is connected to the lid or a web integral with the lid, e.g. by welding.

In an alternative embodiment the sides of the aperture are also of reduced thickness and contact the sides of the intercell connector and in this event the sealing member can be omitted. It is preferred that in this event the intercell connector extends to the top of the partition web integral with the container and during the step in which the webs integral with the lid are welded to those integral with the container those portions of the webs integral with the lid which overlie the intercell connectors are preferably caused to be flush with or deformed against the upper surface of the intercell connectors. The reduced thickness portions at the sides of the apertures may also be provided with one or more slits or notches similar to those at the bottom of the aperture.

In a preferred embodiment each intercell partition has at least one further aperture formed in it, the total area of such apertures in each partition being less than 80mm². In the preferred embodiment each intercell partition has only two further apertures formed in it, one aperture having an area of between 10 and 20mm² and being situated adjacent one side of the intercell partition and the other aperture having an area of between 5 and 10mm² and being situated adjacent the other side of the intercell partition. These apertures facilitate the filling of the battery with electrolyte whereby the battery is tilted to place the larger apertures lowermost and the electrolyte is introduced into one cell and then flows from cell to cell whilst the displaced gas is redistributed through the smaller apertures.

It is preferred that the battery is provided with only a single safety vent, e.g. in the lid, which is arranged to open at a small superatmospheric gauge pressure of e.g. 0.05 to 0.3 bar.

By virtue of the construction in accordance with the invention each intercell connector is substantially sealed in its associated intercell partition without the necessity of providing a complex expensive seal of conventional type. The area of gas communication between adjacent cells is thus determined substantially only by the area of the other apertures in the intercell partitions which are provided for the purpose of filling the battery with electrolyte. These apertures are however of such a size that the problem of water transfer referred to above is minimal.

Further features and details of the present invention will be apparent from the following description of two specific embodiments which is given by way of example with reference to the accompanying drawings, in which:

Figure 1 is a sectional elevation of the top portion of a 12 volt lead acid automotive battery in accordance with the present invention;

Figure 2 is a scrap sectional view on the line II-II in Figure 1;

Figure 3 is a scrap elevation of a portion of the intercell partition shown in Figure I before insertion of the intercell connector into the notch; and

Figure 4 is a sectional elevation of one side of the top of a modified construction of battery in accordance with the invention.

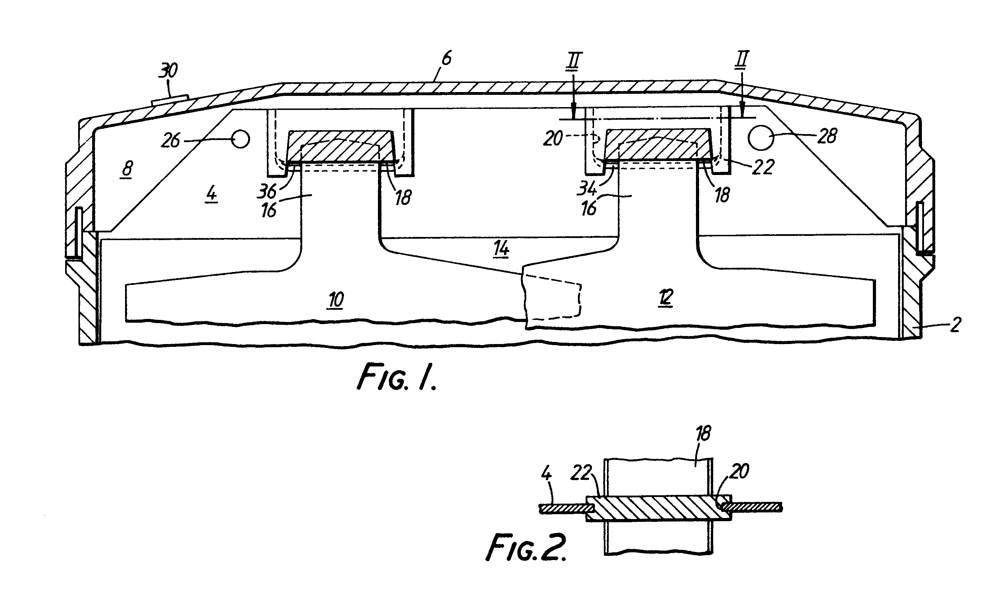

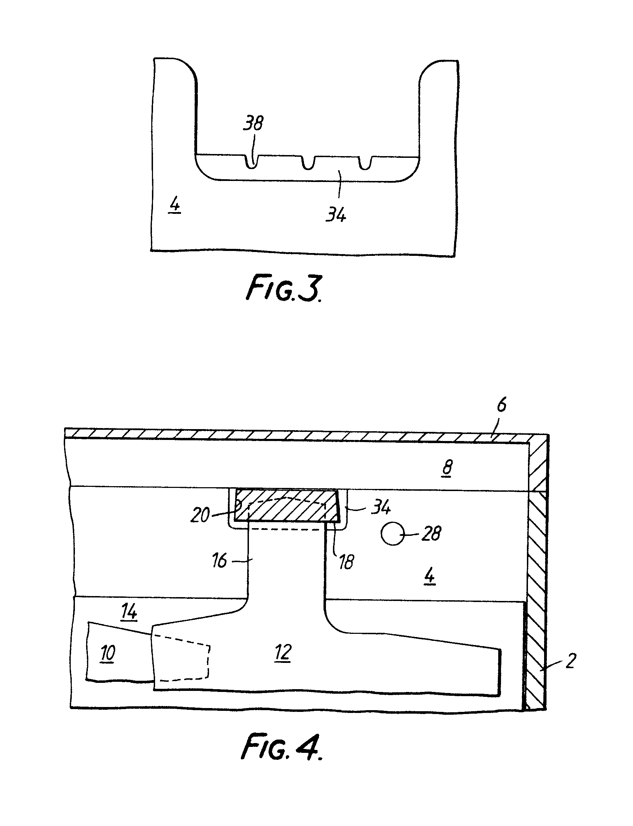

Referring firstly to Figures 1 to 3, the battery includes a rectangular section container 2 of polypropylene within which are five intercell partition webs 4 which are integral with the container and extend above the top of the container and divide the container into six equally sized cell compartments. The container is sealed by a lid 6 which is welded to the container and which is provided with five further webs 8 whose thickness and position correspond to those of the webs 4. The lower edges of the webs 8 abut the upper edges of the webs 4 and are welded thereto and together constitute intercell partitions which impart substantial mechanical rigidity to the container.

The container contains a plurality of positive plates 10 alternating with negative plates 12 and interleaved with sheets 14 of separator material of microfine borosilicate glass fibre material of known type. As conventional, each plate is of generally rectangular shape and extends over substantially the full height and full width of the container. For the sake of simplicity only one plate of each polarity is illustrated in the drawing and the sheet of separator material between them has been omitted.

Each plate has an upstanding conductive plate lug 16. The lugs of the positive and negative plates are arranged in respective lines in each cell and each line is electrically connected by a respective plate strap 18 of lead or lead alloy which is cast on or otherwise connected to the lugs. One plate strap in each end cell is connected to a respective battery terminal and each remaining plate is integral with a plate strap connecting the lugs of opposite polarity in an adjacent cell. Each such integral pair of plate straps constitutes an intercell connector which passes through a notch or cut-away portion 20 at the top of the intervening partition web 4. The undersurface of each intercell connector engages the top of the associated notch 20 and its side and upper surfaces, which are smooth if it has been cast whilst inverted, are engaged by an inverted U-shaped sealing member 22. The side edges of the sealing member 22 are provided with a respective vertical groove which accommodates the vertical edges of the notch 20. The lower edge portion 34 of the notch 20 is of reduced thickness over a height of about 3.5 mm. The portion 34 may be of progressively reducing thickness but in this case it is of an abruptly reduced thickness of 0.5 mm. The portion 34 is engaged by the underside of the intercell connector and deflected by it whereby its upper surface 36 is directed substantially horizontally and it forms a substantial gas seal with the intercell connector. The flexibility of the portion 34 enables it to form a substantial seal notwithstanding the roughness of the undersurface of the intercell connector. The upper edge of the portion 34 is provided with a plurality of cuts or notches 38 to improve its flexibility and ability to conform to the undersurface of the intercell connector. The intercell connector is thus not positively sealed to the intercell partition or the sealing member and the latter is not sealed to the partition web 8 but is welded to the partition web 4 in the same step as that in which the webs 4 and 8 are welded together. The intercell connectors are thus not sealed to the partitions but the area of leakage around them is minimised and is in any event not more than 1 or 2 mm².

Adjacent the top of each partition web 4 there is a vent hole 26 of 3 mm diameter positioned at one end of the web and a larger filling hole 28 of 4.5 mm diameter at the other end of the web. All the cells are thus in communication through these two holes. The interior of the battery communicates with the atmosphere through a non-return vent 30, e.g. of bunsen type which opens to vent the battery if the pressure within it should rise to e.g. 0.1 bar above atmospheric but does not permit any air to enter the battery.

During manufacture, a cell pack comprising alternating positive and negative plates 10, 12 separated by sheets of separator material 14 is inserted into each compartment. Each cell pack is naturally somewhat larger than the associated compartment whereby it is subjected to a small compressive force when within the compartment. Before insertion of the cell packs into the container the plate straps and intercell connectors are provided in any conventional manner. The intercell connectors are pushed down into the notches 20 and engage and deform the portion 34 of reduced thickness and a respective sealing member 22 is pushed over each intercell connector with the grooves in its side edges accommodating the edges of the notch until its upper surface is flush with or slightly proud of the upper edge of the associated web 4. A battery lid having a single aperture at one end is then connected, in this case welded, to the container and the webs 8 are simultaneously welded to the webs 4 and the sealing members 22. The container is then tilted through 30° about one of its longitudinal bottom edges to place the holes 26 above the holes 28. The container is evacuated to as high a level of vacuum as possible and the total volume of electrolyte required for the entire battery is then injected through the aperture in the lid into one of the end cells of the battery. The electrolyte flows rapidly from cell to cell through the apertures 28 under the action of the reduced pressure and distributes itself equally between the cells. During this process air or other gases within the container redistribute themselves through the smaller apertures 26 in the intercell partitions which are above the level of the electrolyte.

When the filling process has been completed the filling and evacuating head is removed and the vent or non-return valve 30 is inserted in the aperture in the lid. Either before or after the filling process the two end cells are electrically connected to terminals on the lid in any conventional manner and the battery is then ready for its initial electrolytic formation and then for use.

The modified embodiment shown in Figure 4 is very similar and similar components are designated by the same reference numerals. However, the sealing member 22 is omitted and the abutting edges of the partition webs 4, 8 are horizontal and at the same level as the upper surface of the intercell connectors. The reduced thickness portion 34 of the intercell partition extends along not only the bottom but also the sides of the notch 20. The nominal width of the notch is slightly less than that of the intercell connector whilst its nominal height is about the same as that of the intercell connector. During assembly the plate straps and intercell connectors are cast by inverting the lugs 16 into a mould and are then slid into the notches whilst deforming the portion 34 at the sides of the notches. The intercell connectors are slid down into contact with the portion 34 at the bottom of the notch and then moved a little further to deform the portion 34. By virtue of the fact that the intercell connectors are desirably still hot after being cast, deformation of the portion 34 into sealing contact with the intercell connector is facilitated. The upper edge of the partition web initially extends 1 or 2 mm above the top of the intercell connector. The welding platen (not shown) by which the webs 4 and 8 are welded together have recesses in positions corresponding to those of the intercell connectors and the webs 4 are melted down to the level of the top of the intercell connectors. Those portions of the webs 8 above the intercell connectors are softened by the welding plates and then come into contact with the intercell connectors and are deformed against them and thus form a substantial seal with them. The portions 34 form a substantial seal with the sides and bottom of the intercell connectors and there is thus substantially no gas communication area around the intercell connectors.

## Claims

1. A multicell recombination electric storage battery comprising a container which is closed by a lid and which defines a plurality of cells separated by intercell partitions extending up to the lid and which contains substantially no free unabsorbed electrolyte, each adjacent pair of cells being connected by a respective intercell connector which passes through an aperture in the associated intercell partition, characterised in that the portion (34) of the intercell partition (4, 8) which defines the base of the aperture (20) is of reduced thickness and contacts the underside of the intercell connector (18).

2. A battery as claimed in Claim 1 characterised in that the portion (34) has two or more notches (38) in its upper surface.

3. A battery as claimed in Claim 1 or Claim 2 characterised in that each intercell partition comprises a web (4) which is integral with the container (2) and in which the apertures (20) are formed and a web (8) which is integral with the lid (6) and connected to the associated web (4).

4. A battery as claimed in any one of the preceding claims characterised by an inverted substantially U-shaped sealing member (22) engaging the top and side edges of the intercell connector (18) and engaging the intercell partition (4, 8).

5. A battery as claimed in Claim 4 characterised in that the sealing member (22) has a groove in each limb which accommodates a respective edge of the aperture (20).

6. A battery as claimed in Claim 4 or Claim 5 characterised in that the sealing member is connected to the lid (6) or a web (8) integral with the lid (6).

7. A battery as claimed in Claims 3 and 6 characterised in that those portions of the web (8) which overlie the intercell connector (18) are flush with or deformed against the upper surface of the intercell connector.

8. A battery as claimed in any one of Claims 1 to 3 characterised in that the portion (34) of the intercell partition (4, 8) which defines the sides of the aperture (20) are of reduced thickness and contact the sides of the intercell connector (18).

9. A battery as claimed in any one of the preceding claims characterised in that each intercell partition (4,8) has at least one further aperture (26,28) formed in it, the total area of the further apertures in each partition being less than 80mm$^2$.

10. A battery as claimed in claim 9 characterised in that each intercell partition has two further apertures (26,28) formed in it, one aperture (28) having an area of between 10 and 20 mm$^2$ and being situated adjacent one side of the intercell partition and the other aperture (26) having an area of between 5 and 10 mm$^2$ and being situated adjacent the other side of the intercell partition.

FIG. 1.

FIG.2.

0220062

FIG.3.

FIG.4.

European Patent Office

**EUROPEAN SEARCH REPORT**

Application number

EP 86 30 8023

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | WO-A-8 101 078 (CHLORIDE GROUP LTD.) * Claim 1; page 3, lines 8-15; page 10, lines 26-30 * | 1 | H 01 M 2/02 H 01 M 2/24 H 01 M 10/34 |
| A | GB-A-2 129 195 (CHLORIDE GROUP PUBLIC LTD. CO.) * Claim 1; figure 5 * | 1 | |
| A | PATENTS ABSTRACTS OF JAPAN, vol. 4, no. 48 (E-6)[530], 12th April 1980, page 25 E 6; & JP-A-55 17 959 (YUSADA DENCHI K.K.) 07-02-1980 | 1,3,7 | |
| A | FR-A-2 140 105 (OLDHAM INTERNATIONAL LTD.) * Figure 2; page 3, line 38 - page 4, line 5; claim 1 * | 1 | TECHNICAL FIELDS SEARCHED (Int. Cl.4) |
| A | FR-A-1 429 716 (R.BOSCH) * Page 2, right-hand column, lines 19-29; figure 1 * | 1 | H 01 M |
| A | GB-A-1 272 103 (ELECTRIC POWER STORAGE LTD.) * Figure 1; claim 1; page 3, lines 1-4 * | 4,5,6 | |
| | -/- | | |

The present search report has been drawn up for all claims

| Place of search | Date of completion of the search | Examiner |
|---|---|---|
| THE HAGUE | 16-12-1986 | D'HONDT J.W. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 253 962  (H.L.DEPRILL et al.)<br>* Figures 2,4,5; column 2, lines 25-31,58-65; column 3, lines  1-7 * | 6 | |
| A | US-A-3 532 557  (R.SASAGAWA)<br>* Figures 4-6; column 3, line 73 - column 4, line 5 * | 1 | |
| A | FR-A-  820 940  (SOCIETE ANONYME DES ANCIENS ETABLISSEMENTS CREPIN)<br>* Figures 3,5,6,7; page 2,  lines 58-77 * | 1 | |

-----

|   | TECHNICAL FIELDS SEARCHED (Int. Cl.4) |
|---|---|

The present search report has been drawn up for all claims

| Place of search | Date of completion of the search | Examiner |
|---|---|---|
| THE HAGUE | 16-12-1986 | D'HONDT J.W. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503 03 82